# EUROPÄISCHE PATENTSCHRIFT

(11) **EP 2 608 977 B1**
(45) Veröffentlichungstag und Bekanntmachung des Hinweises auf die Patenterteilung: **27.04.2016**
(21) Anmeldenummer: 11755258.8
(22) Anmeldetag: 17.08.2011
(51) Int. Cl.: B60K 6/445, B60K 6/442, B60K 6/365, B60K 6/44, F16H 37/08, F16H 37/10

(54) **HYBRIDANTRIEBSORDNUNG FÜR EIN KRAFTFAHRZEUG**
HYBRID DRIVE SYSTEM FOR A MOTOR VEHICLE
SYSTÈME DE PROPULSION HYBRIDE POUR UN VÉHICULE À MOTEUR

(30) Priorität: 24.08.2010 DE 102010035209
(43) Veröffentlichungstag der Anmeldung: 03.07.2013
(73) Patentinhaber: Volkswagen Aktiengesellschaft, 38440 Wolfsburg (DE)
(72) Erfinder: SCHOLZ, Norbert, 38106 Braunschwieg (DE)
(86) Internationale Anmeldenummer: PCT/EP2011/004128
(87) Internationale Veröffentlichungsnummer: WO 2012/025204

(56) Entgegenhaltungen:
- DE-A1-102004 042 007
- DE-A1-102005 030 420
- US-A- 968 290
- US-A1- 2004 058 769
- US-A1- 2006 276 288

## Beschreibung

### Gebiet der Erfindung

Die Erfindung bezieht sich auf eine Hybridantriebsanordnung für ein Kraftfahrzeug, deren Elemente wenigstens abschnittsweise in einem Gehäuse enthalten sind.

### Stand der Technik

Hybridantriebsanordnungen in Form leistungsverzweigter Getriebe sind dem Fachmann in vielfacher Ausgestaltung bekannt. Derartige Antriebsanordnungen umfassen eine erste elektrische Maschine, die üblicherweise als Innenläufer ausgebildet und sowohl im motorischen als auch im generatorischen Betrieb betreibbar ist, sowie eine zweite elektrische Maschine, die üblicherweise ebenfalls als Innenläufer ausgebildet und sowohl im motorischen als auch im generatorischen Betrieb betreibbar ist. Die elektrischen Maschinen sind jeweils über ein Planetengetriebe mit Hohlrad, Sonnenrad und einem Satz drehbar auf einem Steg montierter Planetenräder mit einer eingangsseitigen Antriebs- und/oder einer ausgangsseitigen Abtriebswelle gekoppelt. Weiter sind die elektrischen Maschinen über eine Leistungselektronik sowohl untereinander als auch mit einem elektrischen Energiespeicher, insbesondere einem Akkumulator verbunden. Nachteilig bei derartigen Hybridantriebsanordnungen ist, dass die Abtriebswelle nicht koaxial zu der Antriebswelle angeordnet ist und die bekannten Anordnungen daher für den Längseinbau nicht geeignet sind.

Aus der gattungsgemässen

US 2006/0276288 A1 ist eine Hybridanordnung mit zwei E-Maschihen und drei Planetengetrieben bekannt, bei dem der Rotor der ersten elektrischen Maschine mit dem Sonnenrad und die Antriebswelle mit dem Steg des ersten Planetengetriebe fest verbunden ist. Das Hohlrad des ersten Planetengetriebe ist fest mit dem Rotor der zweiten elektrischen Maschine verbunden. Diese Hybridanordnung ist noch nicht optimal ausgebildet.

### Aufgabenstellung

Es ist die Aufgabe der vorliegenden Erfindung eine optimale Hybridantriebsanordnung für ein Kraftfahrzeug zur Verfügung zu stellen, das für den Längseinbau in Kraftfahrzeugen geeignet ist.

Eine erfindungsgemäße Hybridantriebsanordnung für ein Kraftfahrzeug umfasst ein Gehäuse, in welchem wenigstens abschnittsweise enthalten sind:

Hybridantriebsanordnung für ein Kraftfahrzeug, umfassend ein Gehäuse und darin wenigstens abschnittsweise enthalten
- eine eingangsseitige Antriebswelle (12),
- eine ausgangsseitige, koaxial zu Antriebswelle (12) ausgerichtete Abtriebswelle (14),
- eine erste elektrische Maschine (20) mit einem gehäusefesten, äußeren Stator (22) und einem innenliegenden Rotor (24),
- eine zweite elektrische Maschine (30) mit einem gehäusefesten, äußeren Stator (32) und einem innenliegenden Rotor (34), die der ersten elektrischen Maschine (20) axial benachbart angeordnet ist,
- ein erstes Planetengetriebe (40), umfassend ein Hohlrad (42), ein Sonnenrad (44) und einen mit dem Hohlrad (42) und dem Sonnenrad (44) kämmenden, drehbar auf einem Steg (46) montierten Satz von Planetenrädern (48), wobei der Rotor (24) der ersten elektrischen Maschine (20) mit dem Sonnenrad (44) fest verbunden ist und der Steg (46) mit der Antriebswelle (12) fest verbunden ist,
- ein zweites und ein drittes Planetengetriebe (50; 60), jeweils umfassend ein Hohlrad (52; 62), ein Sonnenrad (54; 64) und einen mit dem Hohlrad (52; 62) und dem Sonnenrad (54; 64) kämmenden, drehbar auf einem Steg (56; 66) montierten Satz von Planetenrädern (58; 68), wobei
- das Sonnenrad (64) des dritten Planetengetriebes (60) mit dem Rotor (34) der zweiten elektrischen Maschine (30) fest verbunden ist,
- das Hohlrad (62) des dritten Planetengetriebes (60) mit der Abtriebswelle (14) gekoppelt ist,
- der Steg (66) des dritten Planetengetriebes (60) mit der Antriebswelle (12) fest verbunden ist, und
- von den Getriebeelementen Hohlrad (52), Sonnenrad (54) und Steg (56) des zweiten Planetengetriebes (50) zwei mit korrespondierenden Getriebeelementen des dritten Planetengetriebes (60) gekoppelt sind und eines mittels einer zweiten Bremse (82) mit dem Gehäuse verbindbar ist,
dadurch gekennzeichnet, dass das Hohlrad (42) des ersten Planetengetriebe (40) mittels einer ersten Bremse (80) mit dem Gehäuse verbindbar und mittels einer ersten Kupplung (70) mit dem Rotor (34) der zweiten elektrischen Maschine (30) verbindbar ist.

Bevorzugte Ausführungsformen der Erfindung sind Gegenstand der abhängigen Ansprüche.

Im Rahmen dieser Beschreibung wird der Begriff "Kopplung" bzw. "gekoppelt" weit verstanden und umfasst insbesondere die feste Verbindung einerseits und die schaltbare Kopplung bzw. Verbindbarkeit andererseits.

"Feste Verbindung" bzw. "fest verbunden" bedeutet im Rahmen der vorliegenden Beschreibung einen nicht (mittels Schaltelementen) trennbaren, grundsätzlich zur Momentenübertragung geeigneten Wirkschluss zwischen zwei Elementen. Dies kann insbesondere eine drehfeste Verbindung sein, bei der die verbundenen Elemente stets eine Drehzahldifferenz von Null. aufweisen. Andererseits sollen im Rahmen der vorliegenden Beschreibung auch beispielsweise über eine Übersetzungsstufe dauerhaft, d.h. nicht (mittels Schaltelementen) trennbar, miteinander gekoppelte Elemente als "fest verbunden" verstanden werden.

"Schaltbare Verbindung" bzw. "schaltbar verbunden" oder "verbindbar" bezeichnet im Rahmen der vorliegenden Beschreibung eine Kopplung zwischen zwei Elementen, die mittels eines Schaltelementes von einem momentenübertragenden, verbundenen Zustand in einen keine Momente übertragenden getrennten Zustand und umgekehrt überführbar ist.

Ein wesentliches Merkmal der vorliegenden Erfindung ist es, dass drei Planetengetriebe zwischen dem Eingang der Antriebsanordnung und deren Ausgang vorgesehen sind. Die Ankopplung des ersten Planetengetriebes ist dabei in allen Fällen gleich. Das Sonnenrad des ersten Planetengetriebes ist mit dem Rotor der ersten elektrischen Maschine fest verbunden. Die erste elektrische Maschine kann somit über das erste Planetengetriebe generatorisch betrieben werden oder motorisch Drehmoment in den Antriebstrang einspeisen. Hierzu ist der Steg des ersten Planetengetriebes fest mit der Antriebswelle verbunden. Das Hohlrad des ersten Planetengetriebes kann mittels einer ersten Bremse am Gehäuse festgelegt werden. Ist es festgelegt, stellt das erste Planetengetriebe eine reine Übersetzungsstufe zwischen Antriebswelle und erster elektrischer Maschine dar. Ist die erste Bremse hingegen geöffnet, kann das erste Planetengetriebe als Leistungsverzweigungsknoten wirken.

Auch die Kopplung der zweiten elektrischen Maschine mit der ersten elektrischen Maschine bzw. dem ersten Planetengetriebe ist bei allen Ausführungsformen der vorliegenden Erfindung dieselbe. So ist das Hohlrad des ersten Planetengetriebes über eine erste Kupplung schaltbar mit dem Rotor der zweiten elektrischen Maschine gekoppelt.

Bezüglich der Ankopplung des zweiten und dritten Planetengetriebes sowie der Kopplung dieser beiden Planetengetriebe untereinander unterscheiden sich die Ausführungsformen der vorliegenden Erfindung, wobei jedoch alle Ausführungsformen zur Realisierung der gleichen Betriebsmodi führt, wie weiter unten näher erläutert werden soll.

Bei einer ersten grundsätzlichen Variante ist der Rotor der zweiten elektrischen Maschine mit den Sonnenrändern des zweiten und dritten Planetengetriebes fest verbunden. Dies impliziert, dass die beiden Sonnenräder auch untereinander fest verbunden sind. Gleichzeitig ist das Hohlrad des zweiten Planetengetriebes mittels einer zweiten Bremse mit dem Gehäuse verbindbar. Bevorzugt ist weiter vorgesehen, dass das Sonnenrad des zweiten Planetengetriebes mit dem Rotor der zweiten elektrischen Maschine fest verbunden ist und der Steg des zweiten Planetengetriebes mittels einer zweiten Kupplung mit dem Hohlrad des dritten Planetengetriebes verbindbar und mit der Abtriebswelle fest verbunden ist. Auf diese Weise lassen sich drei leistungsverzweigte Arbeitsmodi, ein serieller Arbeitsmodus und zwei mechanische Festgänge realisieren.

Die gleichen Betriebsmodi lassen sich bei einer zweiten grundsätzlichen Variante erzielen, bei der mittels der zweiten Bremse das Sonnenrad des zweiten Planetengetriebes mit dem Gehäuse verbindbar und der Steg des dritten Planetengetriebes mittels einer dritten Kupplung mit der Antriebswelle verbindbar ist. Bei dieser zweiten grundsätzlichen Variante kann die Kopplung der beiden Planetengetriebe untereinander auf unterschiedliche Weise realisiert werden. Bei einer ersten Alternative ist vorgesehen, dass das Hohlrad des zweiten Planetengetriebes mit dem Sonnenrad des dritten Planetengetriebes fest verbunden ist und der Steg des zweiten Planetengetriebes mit dem Steg des dritten Planetengetriebes fest verbunden und dieser mittels einer dritten Kupplung mit der Antriebswelle verbindbar ist. Alternativ hierzu kann vorgesehen sein, dass das Hohlrad des zweiten Planetengetriebes mit dem Steg des dritten Planetengetriebes fest verbunden ist und der Steg des zweiten Planetengetriebes mit dem Hohlrad des dritten Planetengetriebes fest verbunden ist. Auch bei dieser Alternative ist der Steg des dritten Planetengetriebes mittels der dritten Kupplung mit der Antriebswelle verbindbar. Bei den Ausführungsformen der zweiten grundsätzlichen Variante lassen sich, unabhängig von der speziell gewählten Kopplungsalternative zwischen zweitem und drittem Planetengetriebe, die gleichen Betriebsmodi wie bei der grundsätzlichen ersten Variante realisieren, nämlich drei leistungsverzweigte Betriebsmodi, ein serieller Betriebsmodus und zwei mechanische Festgänge.

Der Fachmann wird erkennen, dass es allen genannten Varianten und Ausführungsformen gemeinsam ist, dass das Sonnenrad des dritten Planetengetriebes mit dem Rotor der zweiten elektrischen Maschine und sein Steg mit der Antriebswelle fest verbunden sind. Das Hohlrad des dritten Planetengetriebes ist mit der Abtriebswelle gekoppelt - sei es als schaltbare Kopplung oder fest Verbindung. Von den Getriebeelementen des zweiten Planetengetriebes, d.h. von der aus Hohlrad, Sonnenrad und Steg gebildeten Elementengruppe, sind bei allen Ausführungsformen zwei Elemente mit je einem Getriebeelement des dritten Planetengetriebes gekoppelt. Das nicht mit dem dritten Planetengetriebe gekoppelte Getriebeelement des zweiten Planetengetriebes ist hingegen mittels der zweiten Bremse mit dem Gehäuse verbindbar. Diese allen Ausführungsformen der Erfindung gemeinsamen Aspekte sind als wesentliche Merkmale der Erfindung anzusehen, die es in ihrer Gesamtheit erlauben, die genannten Betriebesmodi zu realisieren und dabei Antriebswelle und Abtriebswelle koaxial, d.h. mit gleicher gedachter Achse einander teilweise umgreifend oder vollständig axial benachbart, anzuordnen.

Als eine Weiterbildung der oben erläuterten, zweiten grundsätzlichen Variante der Erfindung kann vorgesehen sein, dass der Steg des dritten Planetengetriebes mittels einer dritten Bremse mit dem Gehäuse verbindbar ist. Diese zusätzliche Bremse erlaubt einen leistungsverzweigten Rückwärtsbetrieb der erfindungsgemäßen Antriebsanordnung. Dies bedeutet, dass ein Rückwärtsbetrieb ermöglicht wird, ohne dass ein mechanischer Rückwärtsgang vorgesehen werden müsste, der aufgrund der zusätzlichen drehenden Teile eines zusätzlichen Umkehrgetriebes aus Komplexität-, Kosten-, Bauraum- und Gewichtsgründen nachteilig ist.

Bei allen vorgenannten Variante und Ausführungsformen kann weiter vorgesehen sein, dass der Rotor der ersten elektrischen Maschine mittels einer vierten Kupplung mit der Antriebswelle verbindbar ist. Hierdurch lassen sich, je nach Schaltzustand der übrigen Schaltelemente, zwei zusätzliche mechanische Festgänge sowie ein zusätzlicher serieller Betriebsmodus realisieren.

Weiter kann bei allen genannten Varianten und Ausführungsformen vorgesehen sein, dass der Rotor der ersten elektrischen Maschine mittels einer vierten Bremse mit dem Gehäuse verbindbar ist. Hierdurch werden zwei weitere mechanische Festgänge geschaffen.

Bei allen vorgenannten Ausführungsformen kann vorgesehen sein, dass die Antriebswelle mittels einer fünften Bremse mit dem Gehäuse verbindbar ist. Mittels dieser Bremse lässt sich im rein elektrischen Betrieb ein auf die Antriebswelle rückwirkendes Drehmoment mechanisch abstützen. Eine Abstützung eines solchen rückwirkenden Drehmomentes ist erforderlich, damit die beim rein elektrischen Betrieb stehende Verbrennungsmaschine, welche außerhalb des Gehäuses an die Antriebswelle angeschlossen ist, nicht leer mitdreht oder rückwärts läuft. Üblicherweise, d.h. gemäß Stand der Technik, erfolgt eine derartige Momentenabstützung nicht, sodass kein Moment am Sonnenrad des ersten Planetengetriebes durch die erste elektrische Maschine im elektrischen Fahrmodus aufgebracht werden kann. Bei der bevorzugt vorgesehenen mechanischen Abstützung gegen das Gehäuse hingegen kann die erste elektrische Maschine unabhängig betrieben und zum Vortrieb des Kraftfahrzeugs benutzt werden.

Weitere Merkmale und Vorteile der Erfindung ergeben sich aus der nachfolgenden, speziellen Beschreibung und den Zeichnungen.

### Kurze Beschreibung der Zeichnungen

Es zeigen:
- Figur 1:: eine erste Ausführungsform einer ersten Variante der erfindungsgemäßen Hybridantriebsanordnung,
- Figur 2:: eine erste Ausführungsform einer zweiten Variante der erfindungsgemäßen Hybridantriebsanordnung,
- Figur 3:: eine zweite Ausführungsform der zweiten Variante der erfindungsgemäßen Hybridantriebsanordnung,
- Figur 4:: eine zweite Ausführungsform der ersten Variante der erfindungsgemäßen Hybridantriebsanordnung,
- Figur 5:: eine dritte Ausführungsform der zweiten Variante der erfindungsgemäßen Hybridantriebsanordnung,
- Figur 6:: eine vierte Ausführungsform der zweiten Variante der erfindungsgemäßen Hybridantriebsanordnung,
- Figur 7:: eine vierte Ausführungsform der ersten Variante der erfindungsgemäßen Hybridantriebsanordnung,
- Figur 8:: eine fünfte Ausführungsform der zweiten Variante der erfindungsgemäßen Hybridantriebsanordnung,
- Figur 9:: eine sechste Ausführungsform der zweiten Variante der erfindungsgemäßen Hybridantriebsanordnung,
- Figur 10:: eine vierte Ausführungsform der ersten Variante der erfindungsgemäßen Hybridantriebsanordnung,
- Figur 11:: eine siebente eine erste Ausführungsform der zweiten Variante der erfindungsgemäßen Hybridantriebsanordnung und
- Figur 12:: eine achte eine erste Ausführungsform der zweiten Variante der erfindungsgemäßen Hybridantriebsanordnung.

### Ausführliche Beschreibung bevorzugte Ausführungsformen

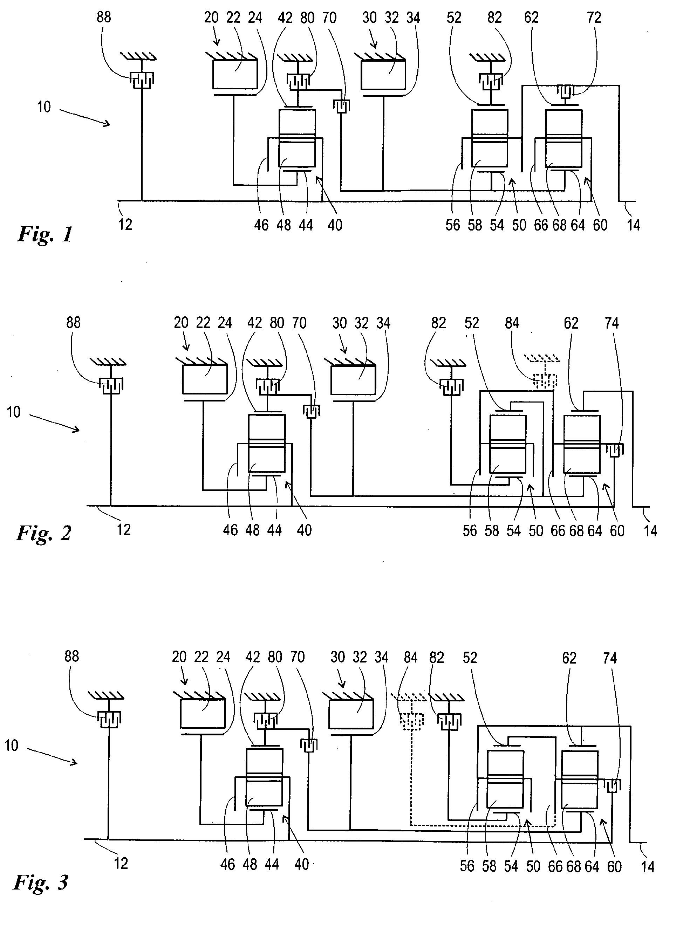

Die Figuren 1-12 zeigen verschiedene Ausführungsformen einer erfindungsgemäßen Hybridantriebsanordnung 10. In allen Figuren wiederkehrende Elemente sollen zunächst gemeinsam diskutiert werden. Im Anschluss sollen die Unterschiede zwischen den einzelnen Ausführungsformen erläutert werden. Gleiche Bezugszeichen in den Figuren deuten auf gleiche oder analoge Elemente hin.

Sämtliche dargestellten Hybridantriebsanordnungen 10 weisen eine eingangsseitige Antriebswelle 12 und eine ausgangsseitige Abtriebswelle 14 auf. Diese sind axial benachbart zueinander angeordnet. Weiter weisen sämtliche dargestellten Hybridantriebsanordnungen 10 eine erste elektrische Maschine 20 und eine zweite elektrische Maschine 30 auf. Der Stator 22 der ersten elektrischen Maschine 20 ist drehfest mit einem nicht im Detail dargestellten Gehäuse verbunden. Der Rotor 24 der ersten elektrischen Maschine 20 ist radial innerhalb des Stators 22 drehbeweglich gelagert. Der Stator 32 der zweiten elektrischen Maschine 30 ist ebenfalls drehfest mit dem Gehäuse verbunden. Der Rotor 34 der zweiten elektrischen Maschine ist radial innerhalb des Stators 32 drehbeweglich gelagert. Die beiden elektrischen Maschinen 20, 30 sind axial benachbart zueinander angeordnet. Man spricht hier von einer sogenannten "In-line"-Konfiguration.

Zwischen der an- und der Abtriebswelle 12, 14 sind drei Planetengetriebe, nämlich das erste Planetengetriebe 40, das zweite Planetengetriebe 50 und das dritte Planetengetriebe 60 angeordnet. Das erste Planetengetriebe 40 weist ein Hohlrad 42, ein Sonnenrad 44 und einen Satz drehbeweglich auf einem Steg 46 gelagerter Planetenräder 48 auf. Das zweite Planetengetriebe 50 weist ein Hohlrad 52, ein Sonnenrad 54 und einen Satz drehbeweglich auf einem Steg 56 gelagerter Planetenräder 58 auf. Das dritte Planetengetriebe 60 weist ein Hohlrad 62, ein Sonnenrad 64 und einen Satz drehbeweglich auf einem Steg 66 gelagerter Planetenräder 68 auf.

Das Hohlrad 42 des ersten Planetengetriebes 40 ist bei allen Ausführungsformen mittels einer ersten Bremse 80 mit dem Gehäuse verbindbar, d.h. bei geschlossener erste Bremse 80 ist das Hohlrad 42 am Gehäuse festgelegt; bei offener erster Bremse 80 kann das Hohlrad 42 frei drehen. Weiter ist das Hohlrad 42 des ersten Planetengetriebes 40 mittels einer ersten Kupplung 70 mit dem Rotor 34 der zweiten elektrischen Maschine 30 gekoppelt. Das Sonnenrad 44 des ersten Planetengetriebes 40 ist mit dem Rotor 24 der ersten elektrischen Maschine 20 fest verbunden. Der Steg 46 des ersten Planetengetriebes 40, der einen ersten Satz Planetenräder 48 trägt, ist mit der Antriebswelle 12 fest verbunden.

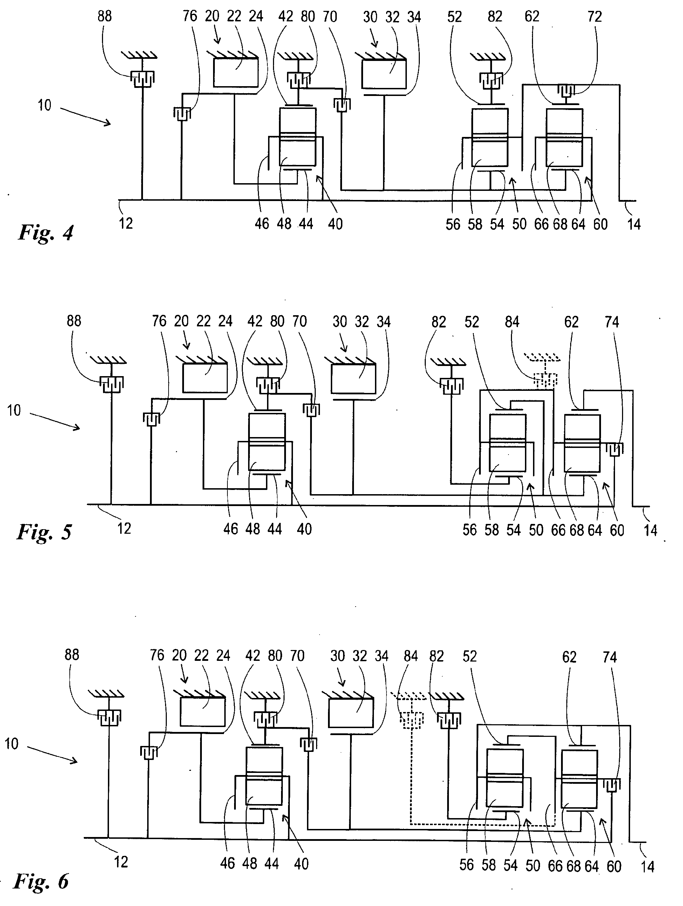

Figur 1 zeigt den Grundtypus einer ersten Variante der vorliegenden Erfindung, die in weiter ausgebildeter Form auch in den Figuren 4, 7 und 10 dargestellt ist. Bei dieser ersten Variante der Erfindung ist das Hohlrad 52 des zweiten Planetengetriebes 50 mittels einer zweiten Bremse 82 mit dem Gehäuse verbindbar. Das Sonnenrad 54 des zweiten Planetengetriebes 50 ist mit dem Rotor 34 der zweiten elektrischen Maschine 30 fest verbunden. Der Steg 56 des zweiten Planetengetriebes 50 ist mit der Abtriebswelle 14 fest verbunden und mittels einer zweiten Kupplung 72 mit dem Hohlrad 62 des dritten Planetengetriebes 60 gekoppelt. Das Sonnenrad 64 des dritten Planetengetriebes 60 ist mit dem Sonnenrad 54 des zweiten Planetengetriebes 50 und somit auch mit dem Rotor 34 der zweiten elektrischen Maschine 30 fest verbunden.

Schließlich weist die Ausführungsform von Figur 1, wie auch die Ausführungsformen aller anderen Figuren eine hier als fünfte Bremse bezeichnete Bremse 88 auf, mittels welcher die Antriebswelle 12 mit dem Gehäuse verbindbar ist. Diese fünfte Bremse 88 entfaltet ihre vorteilhafte Wirkung im rein elektrischen Betrieb durch Abstützung des auf die Antriebswelle rückwirkenden Drehmomentes und ist für die vorliegende Erfindung nicht zwingend erforderlich.

Mit der in Figur 1 gezeigten Ausführungsform lassen sich neun Betriebsmodi realisieren, nämlich drei rein elektrische Modi, drei leistungsverzweigte Modi, ein serieller Betriebsmodus und zwei mechanische Festgänge, bei denen jedoch auch parallel Drehmoment elektrisch beigetragen werden kann.

Im ersten leistungsverzweigten Betriebsmodus sind die erste Kupplung 70 und die zweite Bremse 82 geschlossen, während die übrigen Schaltelemente geöffnet sind. Der Momentenfluss läuft von einer nicht dargestellten Verbrennungskraftmaschine, die an der Antriebswelle 12 ansetzt, über den Steg 46 des ersten Planetengetriebes zu einer ersten Leistungsverzweigungsstelle. Die erste elektrische Maschine 20 kann über das erste Planetengetriebes generatorisch angetrieben werden oder motorisch Drehmoment einspeisen. Über die geschlossene erste Kupplung 70 verläuft der mechanische Zweig weiter über das zweite Planetengetriebe 50 zur Abtriebswelle 14. Dabei kann die zweite elektrische Maschine 30 generatorisch betrieben werden oder motorisch zusätzliches Drehmoment einspeisen.

In einem zweiten leistungsverzweigten Betriebsmodus sind die erste Kupplung 70 und die zweite Kupplung 72 geschlossen, während die Bremsen geöffnet sind. In diesem Fall laufen zwei mechanische Zweige über das erste Planetengetriebe 40 und das dritte Planetengetriebe 60 zur Abtriebswelle 14.

In einem dritten leistungsverzweigten Betriebsmodus sind die zweite Kupplung 72 und die erste Bremse 80 geschlossen, während die übrigen Schaltelemente geöffnet sind. Durch die geöffnete erste Kupplung 70 ist hierbei die Verbindung zwischen dem ersten Planetengetriebe 40 und der zweiten elektrischen Maschine 30 unterbrochen. Das erste Planetengetriebe 40 arbeitet als reine Übersetzungsstufe für die erste elektrische Maschine 20.

Ein mittlerer mechanischer Festgang wird realisiert, indem die erste und die zweite Kupplung 70, 72 sowie die zweite Bremse 82 geschlossen und die übrigen Bremsen geöffnet werden. Der mechanische Leistungsfluss von der Verbrennungskraftmaschine zum Abtrieb läuft über das erste, zweite und dritte Planetengetriebe 40, 50, 60, wobei die elektrischen Maschinen 20, 30 gemäß dem bekannten Parallelhybridprinzip positives oder negatives Moment beisteuern können.

Ein langer mechanischer Gang wird realisiert, indem wiederum die erste und die zweite Kupplung 70, 72 geschlossen werden und zusätzlich die erste Bremse 80 geschlossen wird, während die übrigen Bremsen geöffnet sind. Über das erste Planetengetriebe 40 kann somit kein Moment von der Verbrennungskraftmaschine zum Abtrieb geleitet werden. Vielmehr läuft das Moment allein über das dritte Planetengetriebe 60, wobei die elektrischen Maschinen 20, 30 wiederum im bekannten Parallelhybridmodus positives oder negatives Moment beitragen können.

Ein serieller Betriebsmodus wird realisiert, indem die erste und die zweite Bremse 80, 82 geschlossen und alle übrigen Schaltelemente geöffnet werden. Das erste Planetengetriebe 40 wirkt dabei als reine Übersetzungsstufe zum generatorischen Betrieb der ersten elektrischen Maschine 20, deren elektrische Leistung über eine nicht dargestellte, jedoch bei allen Ausführungsformen vorhandene Leistungselektronik mit elektrischem Energiespeicher zum motorischen Betrieb der zweiten elektrischen Maschine 30 genutzt wird, die ihr Moment über das als reine Übersetzungsstufe wirkende zweite Planetengetriebe 50 zur Abtriebswelle 14 einspeist.

Für die drei erwähnten rein elektrischen Betriebsmodi wird die fünfte Bremse 88 geschlossen. In einem ersten elektrischen Betriebsmodus sind die erste Kupplung 70 und die zweite Bremse 82 geschlossen, während die übrigen Schaltelemente geöffnet sind. In diesem Betriebsmodus tragen die erste und die zweite elektrische Maschine 20, 30 zum Vortrieb bei, wobei auf die Antriebswelle 12 zurückwirkendes Moment von der fünften Bremse 88 abgestützt wird.

In einem zweiten elektrischen Betriebsmodus sind zusätzlich zur fünften Bremse 88 die erste Kummlung 70 und die zweite Kupplung 72 geschlossen, währenf die übrigen Schaltelemente geöffnet sind. In diesem Betriebsmodus trägt nur die zweite elektrische Maschine 30 zum Vortrieb bei, wobei das Moment über das erste und dritte Planetengetriebe 40, 60 zur Abtriebswelle 14 gelangt. Das zweite Planetengetriebe 50 läuft lastfrei um.

Im dritten rein elektrischen Betriebsmodus sind zusätzlich zur fünften Bremse 88 die zweite Kupplung 72 und die erste Bremse 80 geschlossen, während die übrigen Schaltelemente geöffnet sind. Auch hier trägt nur die zweite elektrische Maschine 30 zum Vortrieb bei, wobei das Moment, wobei das Moment der zweiten elektrischen Maschine 30 über das dritte Planetengetriebe 60 zur Abtriebswelle 14 gelangt.

Die Figuren 2 und 3 zeigen alternative Grundformen einer zweiten Variante der vorliegenden Erfindung, die sich gegenüber der zuvor erläuterten ersten Variante dadurch auszeichnet, dass mittels der zweiten Bremse 82 das Sonnenrad 54 des zweiten Planetengetriebes 50 am Gehäuse festlegbar ist. Die Unterschiede zwischen den beiden Grundformen der Figuren 2 und 3 liegen in der wechselseitigen Ankopplung von zweitem und dritten Planetengetriebe 50, 60.

Bei der Ausführungsform von Figur 2 sind die Stege 56, 66 des zweiten und dritten Planetengetriebe 50, 60 fest miteinander verbunden und mittels einer dritten Kupplung 74 mit der Antriebswelle 12 verbindbar. Zugleich ist das Hohlrad 52 des zweiten Planetengetriebes 50 mit dem Sonnenrad 64 des dritten Planetengetriebes 60 fest verbunden. Das Hohlrad 62 des dritten Planetengetriebes 60 ist mit der Abtriebswelle 14 fest verbunden.

Bei der Ausführungsform von Figur 3 sind das Hohlrad 52 des zweiten Planetengetriebes 50 und der Steg 66 des dritten Planetengetriebes 60 fest verbunden und mittels der dritten Kupplung 74 mit der Antriebswelle 12 verbindbar. Zugleich sind umgekehrt der Steg 56 des zweiten Planetengetriebes 50 und das Hohlrad 62 des dritten Planetengetriebes 60 fest miteinander sowie mit der Abtriebswelle 14 verbunden.

Bezüglich der zuvor erwähnten realisierbaren Betriebsmodi unterscheiden sich die beiden Grundformen der zweiten Variante gemäß den Figuren 2 und 3, von denen Weiterbildungen in den Figuren 5, 8 und 11 bzw. 6, 9 und 12 dargestellt sind, weder untereinander noch von der Grundform der ersten Variante gemäß Figur 1. Bezüglich der Schaltzustände wird daher auf das oben gesagte verwiesen, wobei die im Zusammenhang mit der ersten Variante genannte "zweite Kupplung 72" im Zusammenhang mit der zweiten Variante durch "dritte Kupplung 74" zu ersetzen ist. Der Fachmann wird im Übrigen Abweichungen im konkreten Momentenverlauf jeweils ohne Schwierigkeit anhand der dargestellten Schemata erkennen können.

In den Figuren 2 und 3 ist (ebenso wie in den nachfolgenden Figuren 5, 6, 8, 9 11 und 12) gestrichelt noch eine hier als dritte Bremse 84 bezeichnete Bremse dargestellt, mittels derer der Steg 66 des dritten Planetengetriebes 60 am Gehäuse festgelegt werden kann. Diese zusätzliche Bremse 84 hat die Wirkung, einen Rückwärtsgang ohne zusätzliches Umkehrgetriebe realisieren zu können. Bei geschlossener "Rückwärtsbremse" 86 und geschlossener erste Kupplung 70 bei im übrigen offenen Schaltelementen wird Moment der ersten und/oder zweiten elektrischen Maschine 20, 30 aufgrund des zusammen mit der Antriebswelle 12 festgehaltenen Stegs 66 des dritten Planetengetriebes 60 über das dritte Planetengetriebe 60 bei gleichzeitiger Drehrichtungsumkehr an die Abtriebswelle 14 übertragen.

Die Figuren 4 bis 6 zeigen Weiterbildungen der Ausführungsformen der Figuren 1 bis 3, wobei zusätzlich zu den dort gezeigten Elementen hier eine vierte Kupplung 76 vorgesehen ist, mittels derer jeweils der Rotor 24 der ersten elektrischen Maschine 20 mit der Antriebswelle 12 koppelbar ist. Durch die vierte Kupplung 76 eröffnen sich jeweils drei neue Betriebsmodi, nämlich zwei mechanische Festgänge (ein langer und ein kurzer Gang) sowie ein zweiter serieller Betriebsmodus.

Zur Realisierung des zusätzlichen kurzen Ganges werden die vierte Kupplung 76 und die erste Kupplung 70 sowie die zweite Bremse 82 geschlossen, während die übrigen Schaltelemente geöffnet sind. Das Drehmoment läuft von der Verbrennungskraftmaschine über das als Block umlaufende erste Planetengetriebe 40 und das dritte Planetengetriebe 60 zur Abtriebswelle 14. Dabei können die erste und die zweite elektrische Maschine 20, 30 parallel positives oder negatives Moment beitragen.

Zur Realisierung des zusätzlichen langen Ganges werden alle Kupplungen, 70, 72 bzw. 74 und 76 geschlossen, während die Bremsen 80, 82, 88 geöffnet sind. Das erste, das zweite und das dritte Planetengetriebe 40, 50, 60 laufen dabei als Block um. Das Moment der Verbrennungskraftmaschine wird direkt auf die Abtriebswelle 14 übertragen.

Zur Realisierung des zweiten seriellen Betriebsmodus werden die vierte Kupplung 76 und die zweite Bremse 82 geschlossen, während die übrigen Schaltelemente geöffnet sind. Die erste elektrische Maschine 20 wird dabei mit als Block umlaufendem erstem Planetengetriebe 40 generatorisch betrieben. Das motorisch von der zweiten elektrischen Maschine 30 erzeugte Drehmoment wird über das zweite Planetengetriebe 50 zur Abtriebswelle 14 (erste Variante) bzw. über das zweite und das dritte Planetengetriebe 50, 60 (zweite und dritte Variante) geleitet.

Im Übrigen entsprechen die realisierbaren Betriebsmodi den weiter oben beschriebenen.

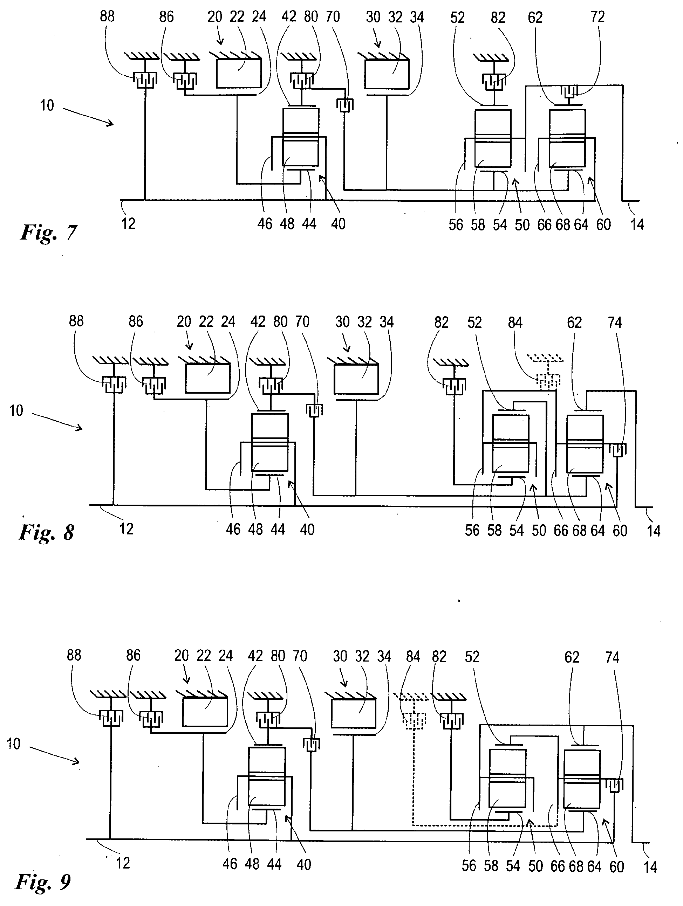

Die Figuren 7 bis 9 zeigen eine alternative Weiterbildung der Grundformen der Figuren 1 bis 3. Sie zeichnen sich dadurch aus, dass der Rotor 24 der ersten elektrischen Maschine 20 mittels einer vierten Bremse 86 am Gehäuse festlegbar ist. Hierdurch ergeben sich zwei zusätzliche mechanische Festgänge. Ein erster zusätzlicher Gang wird realisiert, indem die erste Kupplung 70, die zweite Bremse 82 und die vierte Bremse 86 geschlossen und die übrigen Schaltelemente geöffnet werden. Ein weiterer zusätzlicher Festgang ergibt sich durch Schließen der ersten und der zweiten Kupplung 70, 72 sowie Schließen der vierten Bremse 86 mit im Übrigen geöffneten weiteren Bremsen.

Bezüglich der übrigen realisierbaren Betriebsmodi wird auf das zuvor gesagte verwiesen.

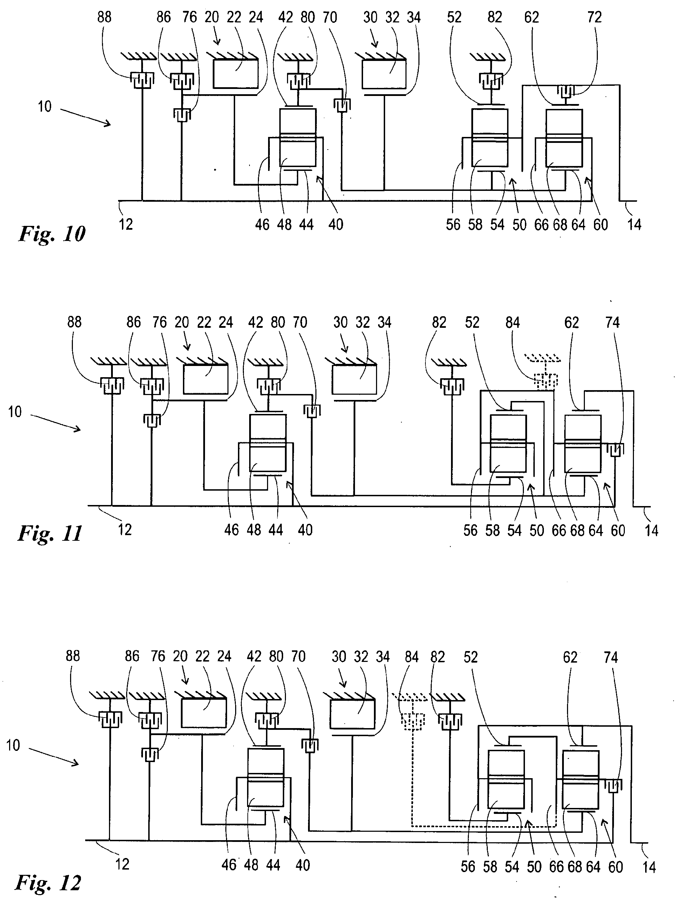

Die Ausführungsformen der Figuren 10 bis 12 verbinden die Merkmale der Ausführungsformen der Figuren 7 bis 9 einerseits und 4 bis 6 andererseits, d.h. sie enthalten jeweils sowohl eine vierte Kupplung 76 als auch eine vierte Bremse 86 in der zuvor geschilderten Ausprägung mit dem zuvor geschilderten Wirkungen.

Bezüglich aller übrigen realisierbaren Betriebsmodi wird auf das zuvor gesagte verwiesen.

### Bezugszeichenliste

- 10: Hybridantriebsanordnung
- 12: Antriebswelle
- 14: Abtriebswelle
- 20: erste elektrische Maschine
- 22: Stator von 20
- 24: Rotor von 20
- 30: zweite elektrische Maschine
- 32: Stator von 30
- 34: Rotor von 30
- 40: erstes Planetengetriebe
- 42: Hohlrad von 40
- 44: Sonnenrad von 40
- 46: Steg von 40
- 48: Planetenräder von 40
- 50: zweites Planetengetriebe
- 52: Hohlrad von 50
- 54: Sonnenrad von 50
- 56: Steg von 50
- 58: Planetenräder von 50
- 60: drittes Planetengetriebe
- 62: Hohlrad von 60
- 64: Sonnenrad von 60
- 66: Steg von 60
- 68: Planetenräder von 60
- 70: erste Kupplung
- 72: zweite Kupplung
- 74: dritte Kupplung
- 76: vierte Kupplung
- 80: erste Bremse
- 82: zweite Bremse
- 84: dritte Bremse
- 86: vierte Bremse
- 88: fünfte Bremse

## Patentansprüche

1. Hybridantriebsanordnung für ein Kraftfahrzeug, umfassend ein Gehäuse und darin wenigstens abschnittsweise enthalten
- eine eingangsseitige Antriebswelle (12),
- eine ausgangsseitige, koaxial zu Antriebswelle (12) ausgerichtete Abtriebswelle (14),
- eine erste elektrische Maschine (20) mit einem gehäusefesten, äußeren Stator (22) und einem innenliegenden Rotor (24),
- eine zweite elektrische Maschine (30) mit einem gehäusefesten, äußeren Stator (32) und einem innenliegenden Rotor (34), die der ersten elektrischen Maschine (20) axial benachbart angeordnet ist,
- ein erstes Planetengetriebe (40), umfassend ein Hohlrad (42), ein Sonnenrad (44) und einen mit dem Hohlrad (42) und dem Sonnenrad (44) kämmend en, drehbar auf einem Steg (46) montierten Satz von Planetenrädern (48), wobei der Rotor (24) der ersten elektrischen Maschine (20) mit dem Sonnenrad (44) fest verbunden ist und der Steg (46) mit der Antriebswelle (12) fest verbunden ist,
- ein zweites und ein drittes Planetengetriebe (50; 60), jeweils umfassend ein Hohlrad (52; 62), ein Sonnenrad (54; 64) und einen mit dem Hohlrad (52; 62) und dem Sonnenrad (54; 64) kämmenden, drehbar auf einem Steg (56; 66) montierten Satz von Planetenrädern (58; 68),
wobei
- das Sonnenrad (64) des dritten Planetengetriebes (60) mit dem Rotor (34) der zweiten elektrischen Maschine (30) fest verbunden ist,
- das Hohlrad (62) des dritten Planetengetriebes (60) mit der Abtriebswelle (14) gekoppelt ist,
- der Steg (66) des dritten Planetengetriebes (60) mit der Antriebswelle (12) fest verbunden ist, und
- von den Getriebeelementen Hohlrad (52), Sonnenrad (54) und Steg (56) des zweiten Planetengetriebes (50) zwei mit korrespondierenden Getriebeelementen des dritten Planetengetriebes (60) gekoppelt sind und eines mittels einer zweiten Bremse (82) mit dem Gehäuse verbindbar ist,
**dadurch gekennzeichnet, dass** das Hohlrad (42) des ersten Planetengetriebe (40) mittels einer ersten Bremse (80) mit dem Gehäuse verbindbar und mittels einer ersten Kupplung (70) mit dem Rotor (34) der zweiten elektrischen Maschine (30) verbindbar ist.

2. Hybridantriebsanordnung nach Anspruch 1,
**dadurch gekennzeichnet, dass**
- mittels der zweiten Bremse (82) das Hohlrad (52) des zweiten Planetengetriebes (50) mit dem Gehäuse verbindbar ist und
- das Sonnenrad (54) des zweiten Planetengetriebes (50) mit dem Sonnenrad (64) des dritten Planetengetriebes (60) fest verbunden ist.

3. Hybridantriebsanordnung nach Anspruch 2,
**dadurch gekennzeichnet, dass**
- das Sonnenrad (54) des zweiten Planetengetriebes (50) mit dem Rotor (34) der zweiten elektrischen Maschine (30) fest verbunden ist und
- der Steg (56) des zweiten Planetengetriebes (50) mittels einer zweiten Kupplung (72) mit dem Hohlrad (62) des dritten Planetengetriebes (60) verbindbar und mit der Abtriebswelle (14) fest verbunden ist.

4. Hybridantriebsanordnung nach Anspruch 1,
**dadurch gekennzeichnet, dass**
- mittels der zweiten Bremse (82) das Sonnenrad (54) des zweiten Planetengetriebes (50) mit dem Gehäuse verbindbar ist und
- der Steg (66) des dritten Planetengetriebes (60) mittels einer dritten Kupplung (74) mit der Antriebswelle (12) verbindbar ist.

5. Hybridantriebsanordnung nach Anspruch 4,
**dadurch gekennzeichnet, dass**
- das Hohlrad (52) des zweiten Planetengetriebes (50) mit dem Sonnenrad (64) des dritten Planetengetriebes (60) fest verbunden ist und
- der Steg (56) des zweiten Planetengetriebes (50) mit dem Steg (66) des dritten Planetengetriebes (60) fest verbunden ist.

6. Hybridantriebsanordnung nach Anspruch 4,
**dadurch gekennzeichnet, dass**
- das Hohlrad (52) des zweiten Planetengetriebes (50) mit dem Steg (66) des dritten Planetengetriebes (60) fest verbunden ist und
- der Steg (56) des zweiten Planetengetriebes (50) mit dem Hohlrad (62) des dritten Planetengetriebes (60) fest verbunden ist.

7. Hybridantriebsanordnung nach einem der Ansprüche 4 bis 6,
**dadurch gekennzeichnet, dass**
der Steg (66) des dritten Planetengetriebes (60) mittels einer dritten Bremse (84) mit dem Gehäuse verbindbar ist.

8. Hybridantriebsanordnung nach einem der vorangehenden Ansprüche,
**dadurch gekennzeichnet, dass**
der Rotor (24) der ersten elektrischen Maschine (20) mittels einer vierten Kupplung (76) mit der Antriebswelle (12) verbindbar ist.

9. Hybridantriebsanordnung nach einem der vorangehenden Ansprüche,
**dadurch gekennzeichnet, dass**
der Rotor (24) der ersten elektrischen Maschine (20) mittels einer vierten Bremse (86) mit dem Gehäuse verbindbar ist.

10. Hybridantriebsanordnung nach einem der vorangehenden Ansprüche,
**dadurch gekennzeichnet, dass**
die Antriebswelle (12) mittels einer fünften Bremse (88) mit dem Gehäuse verbindbar ist.

## Claims

1. Hybrid drive arrangement for a motor vehicle, comprising a housing and at least partially contained therein
- an input-side drive shaft (12),
- an output-side driven shaft (14) aligned coaxially with respect to the drive shaft (12),
- a first electric machine (20) with a housingmounted outer stator (22) and an inner rotor (24),
- a second electric machine (30) with a housingmounted outer stator (32) and an inner rotor (34), which second electric machine is arranged axially adjacent to the first electric machine (20),
- a first planetary gearing (40) comprising a ring gear (42), a sun gear (44) and a set of planetary gears (48) mounted rotatably on a web (46) and meshing with the ring gear (42) and the sun gear (44), wherein the rotor (24) of the first electric machine (20) is fixedly connected to the sun gear (44) and the web (46) is fixedly connected to the drive shaft (12),
- a second and a third planetary gearing (50; 60), in each case comprising a ring gear (52; 62), a sun gear (54; 64) and a set of planetary gears (58; 68) mounted rotatably on a web (56; 66) and meshing with the ring gear (52; 62) and with the sun gear (54; 64), wherein
- the sun gear (64) of the third planetary gearing (60) is fixedly connected to the rotor (34) of the second electric machine (30),
- the ring gear (62) of the third planetary gearing (60) is coupled to the driven shaft (14),
- the web (66) of the third planetary gearing (60) is fixedly connected to the drive shaft (12), and
- of the gearing elements ring gear (52), sun gear (54) and web (56) of the second planetary gearing (50) two are coupled to corresponding gearing elements of the third planetary gearing (60) and one is connectable to the housing by means of a second brake (82),
**characterized in that** the ring gear (42) of the first planetary gearing (40) is connectable to the housing by means of a first brake (80) and is connectable to the rotor (34) of the second electric machine (30) by means of a first clutch (70).

2. Hybrid drive arrangement according to Claim 1, **characterized in that**
- the ring gear (52) of the second planetary gearing (50) is connectable to the housing by means of the second brake (82), and
- the sun gear (54) of the second planetary gearing (50) is fixedly connected to the sun gear (64) of the third planetary gearing (60).

3. Hybrid drive arrangement according to Claim 2, **characterized in that**
- the sun gear (54) of the second planetary gearing (50) is fixedly connected to the rotor (34) of the second electric machine (30), and
- the web (56) of the second planetary gearing (50) is connectable to the ring gear (62) of the third planetary gearing (60) and is fixedly connected to the driven shaft (14) by means of a second clutch (72).

4. Hybrid drive arrangement according to Claim 1, **characterized in that**
- the sun gear (54) of the second planetary gearing (50) is connectable to the housing by means of the second brake (82), and
- the web (66) of the third planetary gearing (60) is connectable to the drive shaft (12) by means of a third clutch (74).

5. Hybrid drive arrangement according to Claim 4, **characterized in that**
- the ring gear (52) of the second planetary gearing (50) is fixedly connected to the sun gear (64) of the third planetary gearing (60), and
- the web (56) of the second planetary gearing (50) is fixedly connected to the web (66) of the third planetary gearing (60).

6. Hybrid drive arrangement according to Claim 4, **characterized in that**
- the ring gear (52) of the second planetary gearing (50) is fixedly connected to the web (66) of the third planetary gearing (60), and
- the web (56) of the second planetary gearing (50) is fixedly connected to the ring gear (62) of the third planetary gearing (60).

7. Hybrid drive arrangement according to one of Claims 4 to 6,
**characterized in that**
the web (66) of the third planetary gearing (60) is connectable to the housing by means of a third brake (84).

8. Hybrid drive arrangement according to one of the preceding claims,
**characterized in that**
the rotor (24) of the first electric machine (20) is connectable to the drive shaft (12) by means of a fourth clutch (76).

9. Hybrid drive arrangement according to one of the preceding claims,
**characterized in that**
the rotor (24) of the first electric machine (20) is connectable to the housing by means of a fourth brake (86).

10. Hybrid drive arrangement according to one of the preceding claims,
**characterized in that**
the drive shaft (12) is connectable to the housing by means of a fifth brake (88).

## Revendications

1. Système de propulsion hybride pour un véhicule à moteur, comprenant un carter qui contient, dans au moins dans certaines parties de celui-ci,
- un arbre primaire (12) côté entrée,
- un arbre secondaire (14) côté sortie orienté coaxialement par rapport à l'arbre primaire (12),
- un premier moteur électrique (20) comportant un stator extérieur (22), fixé au carter, et un rotor intérieur (24),
- un deuxième moteur électrique (30) comportant un stator extérieur (32), fixé au carter, et un rotor intérieur (34), le deuxième moteur électrique étant disposé de manière axialement adjacente au premier moteur électrique (20),
- un premier train planétaire (40), comprenant une couronne (42), un pignon planétaire (44) et un jeu de satellites (48) montés de manière rotative sur un porte-satellites (46) et s'engrenant avec la couronne (42) et avec le pignon planétaire (44), dans lequel le rotor (24) du premier moteur électrique (20) est solidaire du pignon planétaire (44) et le porte-satellites (46) est solidaire de l'arbre primaire (12),
- des deuxième et troisième trains planétaires (50 ; 60), comprenant respectivement une couronne (52 ; 62), un pignon planétaire (54 ; 64) et un jeu de satellites (58 ; 68) montés de manière rotative sur un porte-satellites (56 ; 66) et s'engrenant avec la couronne (52 ; 62) et avec le pignon planétaire (54 ; 64), dans lequel
- le pignon planétaire (64) du troisième train planétaire (60) est solidaire du rotor (34) du deuxième moteur électrique (30),
- la couronne (62) du troisième train planétaire (60) est accouplée à l'arbre secondaire (14),
- le porte-satellite (66) du troisième train planétaire (60) est solidaire de l'arbre primaire (12), et
- parmi les éléments d'entraînement, la couronne (52), le pignon planétaire (54) et le porte-satellites (56) du deuxième train planétaire (50), deux d'entre eux sont accouplés à des éléments d'entraînement correspondants du troisième train planétaire (60) et l'un d'entre eux peut être relié au carter au moyen d'un deuxième frein (82),
**caractérisé en ce que** la couronne (42) du premier train planétaire (40) peut être reliée au carter au moyen d'un premier frein (80) et peut être reliée au rotor (34) du deuxième moteur électrique (30) au moyen d'un premier embrayage (70).

2. Système de propulsion hybride selon la revendication 1, **caractérisé en ce que**
- la couronne (52) du deuxième train planétaire (50) peut être reliée au carter au moyen du deuxième frein (82), et
- le pignon planétaire (54) du deuxième train planétaire (50) est solidaire du pignon planétaire (64) du troisième train planétaire (60).

3. Système de propulsion hybride selon la revendication 2, **caractérisé en ce que**
- le pignon planétaire (54) du deuxième train planétaire (50) est solidaire du rotor (34) du deuxième moteur électrique (30) et
- le porte-satellites (56) du deuxième train planétaire (50) peut être relié à la couronne (62) du troisième train planétaire (60) et à l'arbre secondaire (14) au moyen d'un deuxième embrayage (72).

4. Système de propulsion hybride selon la revendication 1, **caractérisé en ce que**
- le pignon planétaire (54) du deuxième train planétaire (50) peut être relié au carter au moyen du deuxième frein (82) et
- le porte-satellites (66) du troisième train planétaire (60) peut être relié à l'arbre primaire (12) au moyen d'un troisième embrayage (74).

5. Système de propulsion hybride selon la revendication 4, **caractérisé en ce que**
- la couronne (52) du deuxième train planétaire (50) est solidaire du pignon planétaire (64) du troisième train planétaire (60) et
- le porte-satellites (56) du deuxième train planétaire (50) est solidaire du porte-satellites (66) du troisième train planétaire (60).

6. Système de propulsion hybride selon la revendication 4, **caractérisé en ce que**
- la couronne (52) du deuxième train planétaire (50) est solidaire du porte-satellites (66) du troisième train planétaire (60) et
- le porte-satellites (56) du deuxième train planétaire (50) est solidaire de la couronne (62) du troisième train planétaire (60).

7. Système de propulsion hybride selon l'une quelconque des revendications 4 à 6, **caractérisé en ce que**
- le porte-satellites (66) du troisième train planétaire (60) peut être relié au carter au moyen d'un troisième frein (84).

8. Système de propulsion hybride selon l'une quelconque des revendications précédentes, **caractérisé en ce que**
le rotor (24) du premier moteur électrique (20) peut être relié à l'arbre primaire (12) au moyen d'un quatrième embrayage (76).

9. Système de propulsion hybride selon l'une quelconque des revendications précédentes, **caractérisé en ce que**
le rotor (24) de la première machine électrique (20) peut être relié au carter au moyen d'un quatrième frein (86).

10. Système de propulsion hybride selon l'une quelconque des revendications précédentes, **caractérisé en ce que**
l'arbre primaire (12) peut être relié au carter au moyen d'un cinquième frein (88).
